# EUROPEAN PATENT APPLICATION

(11) **EP 4 351 199 A1**
(43) Date of publication of application: **10.04.2024**
(21) Application number: 22815077.7
(22) Date of filing: 23.05.2022
(51) Int. Cl.: H04W 16/28, H04W 72/04

(54) **BEAM PROCESSING METHOD, NETWORK DEVICE, BASE STATION, AND COMPUTER READABLE STORAGE MEDIUM**

(30) Priority: 03.06.2021 CN 202110621837
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); WANG, Yuxin, Shenzhen, Guangdong 518057 (CN); CHEN, Yijian, Shenzhen, Guangdong 518057 (CN); DOU, Jianwu, Shenzhen, Guangdong 518057 (CN); YANG, Jun, Shenzhen, Guangdong 518057 (CN)
(74) Representative: Savi, Massimiliano
(86) International application number: PCT/CN2022/094470
(87) International publication number: WO 2022/253030

(57) **Abstract**

A beam processing method, a network device, a base station, and a computer readable storage medium. The beam processing method applied to a network node comprises: obtaining first beam identifier information and beam time domain information sent by a base station, the beam time domain information comprising beamforming time information, and the beamforming time information being used for representing the time at which the network node forms a beam to guide a signal (S100); determining a first time domain according to the beamforming time information (S200); and forming, in the first time domain, a first beam for guiding a signal, the first beam being determined by the network node according to the first beam identifier information (S300).

## Description

### CROSS-REFERENCE TO RELATED APPLICATION

This application is filed on the basis of the Chinese patent application No. 202110621837.8 filed June 3, 2021, and claims priority of the Chinese patent application, the entire contents of which are incorporated herein by reference.

### TECHNICAL FIELD

The present disclosure relates to but is not limited to the technical field of communication, in particular to a method for beam processing, a network device, a base station, and a computer-readable storage medium.

### BACKGROUND

In wireless communication, the electromagnetic wave signal is transmitted from the transmitter and finally reaches the receiver with attenuation. The reception of the electromagnetic wave signal by the receiver may be not good due to the attenuation. For example, in wireless communication between a base station and a terminal device, when the base station transmits an electromagnetic wave signal to the terminal device, the terminal device can only receive part of the electromagnetic wave signal, and the other part of the electromagnetic wave signal may not be received by the terminal device due to absorption, scattering, or other losses. Similarly, when the terminal device transmits an electromagnetic wave signal to the base station, the base station can only receive a part of the electromagnetic wave signal, and the other part of the electromagnetic wave signal may not be received by the base station due to losses such as absorption and scattering. In either case, the deterioration in the quality of wireless communication between the base station and the terminal device will occur, and the communication efficiency between the base station and the terminal device will be reduced.

### SUMMARY

The following is a summary of the subject matter described herein. This summary is not intended to limit the scope of protection of the claims.

Provided are a method for beam processing, a network device, a base station, and a computer-readable storage medium in some embodiments of the present disclosure, which help to improve the wireless communication efficiency.

According to an aspect of the present disclosure, an embodiment provides a method for beam processing, which is applied to a network node, the method includes, acquiring first beam identification information and beam time domain information sent by a base station, where the beam time domain information includes beamforming time information that is indicative of a time corresponding to the network node forming beams to direct signals; determining a first time domain according to the beamforming time information; and forming a first beam configured for signal directing in the first time domain, where the first beam is determined by the network node according to the first beam identification information.

According to another aspect of the present disclosure, an embodiment provides a method for beam processing, which is applied to a base station, the method includes, sending first beam identification information and beam time domain information to a network node, to instruct the network node to determine a first time domain according to beamforming time information within the beam time domain information, and to instruct the network node to form a first beam configured for signal directing in the first time domain; and where the beamforming time information is indicative of a time at which the network node forms the beam configured for signal directing, and the first beam is determined by the network node according to the first beam identification information.

According to yet another aspect of the present disclosure, an embodiment provides a network device, which includes a first memory, a first processor, and a computer program stored in the first memory and executable by the first processor which, when executed by the first processor, causes the first processor to carry out the method for beam processing applied to the network device as described above.

According to yet another embodiment of the present disclosure, an embodiment provides a base station, which includes a second memory, a second processor, and a computer program stored in the second memory and executable by the second processor which, when executed by the second processor causes the second processor to carry out the method for beam processing applied to the base station as described above.

According to yet another aspect of the present disclosure, an embodiment provides a computer-readable storage medium storing a computer-executable instruction which, when executed by a processor causes the processor to carry out any one of the methods as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims, and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing a network topology in which a method for beam processing according to an embodiment of the present disclosure is carried out;
FIG. 2 depicts a flowchart showing a method for beam processing according to an embodiment of the present disclosure;
FIG. 3 depicts a flowchart showing the formation of a first beam in a method for beam processing according to an embodiment of the present disclosure;
FIG. 4 depicts a flowchart showing the formation of a first beam in a method for beam processing according to another embodiment of the present disclosure;
FIG. 5 depicts a flowchart showing a method for beam processing according to another embodiment of the present disclosure;
FIG. 6 depicts a schematic diagram showing a network node directing a signal between a base station and a terminal device according to an embodiment of the present disclosure;
FIG. 7 depicts a schematic diagram showing a network node directing a signal between a base station and a terminal device according to another embodiment of the present disclosure;
FIG. 8 depicts a flowchart showing the formation of a first beam in a method for beam processing according to another embodiment of the present disclosure;
FIG. 9 depicts a flowchart showing the formation of a first beam in a method for beam processing according to another embodiment of the present disclosure;
FIG. 10 depicts a flowchart showing a method for beam processing according to another embodiment of the present disclosure;
FIG. 11 depicts a flowchart showing a method for beam processing according to another embodiment of the present disclosure;
FIG. 12 depicts a flowchart showing a method for beam processing according to yet another embodiment of the present disclosure;
FIG. 13 depicts a flowchart showing the process before sending the first beam identification information in the method for beam processing according to another embodiment of the present disclosure;
FIG. 14 depicts a schematic diagram showing a network device according to an embodiment of the present disclosure; and
FIG. 15 depicts a schematic diagram showing a base station according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation to the present disclosure.

It should be noted that although the devices are shown with individual functional modules in the schematic diagram and the logical sequences are shown in the flow chart, in some cases, the devices can have different modules than those shown and the steps can be executed in a different order than those shown. It should be noted that the terms "first" and "second", if used in the description, the claims, and the drawings are intended to distinguish similar objects, and do not necessarily imply any specific order or sequence.

Provided are a method for beam processing, a network device, a base station, and a computer-readable storage medium in some embodiments of the present disclosure. The network node can determine the first beam for signal directing based on the first beam identification information, so that the electromagnetic wave signals sent or received by the base station can be directed through the first beam under the condition that the first beam is formed in the first time domain. That is, the electromagnetic wave signal directing can improve the target electromagnetic wave signal receiving capacity of the base station or the terminal device, thereby enhancing the wireless communication quality and improving wireless communication efficiency. Moreover, since the first time domain is determined according to the beamforming time information, and the beamforming time information can represent the time at which the network node forms the beam for signal directing. And thus, the network node can conduct signal directing in the corresponding time by forming the corresponding beam in the first time domain, thus avoiding the generation of disordered directing or signaling storm, which is beneficial to improving the wireless communication efficiency.

Some embodiments of the present disclosure will be further illustrated with reference to the drawings.

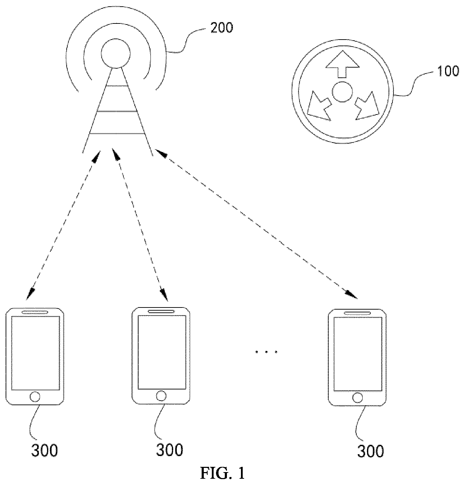

FIG. 1 depicts a schematic diagram showing a network topology in which a beam processing method according to an embodiment of the present disclosure is carried out.

As shown FIG. 1, the network topology includes a network node 100, a base station 200 and one or more terminal devices 300. Each terminal device 300 is matched with the base station 200. That is, the base station 200 can send electromagnetic wave signals to each terminal device 300, and also each terminal device 300 can send electromagnetic wave signals to the base station 200. The network node 100 has communication ability and can establish communicative connection with the base station 200. For example, the network node 100 can receive the communication from the base station 200 or send the communication to the base station 200. In other words, the base station 200 and the network node 100 in this network topology can communicate with each other. The communication can be carried out through the base station 200 and the network node 100, or through the control unit or control center in the relevant network, which is collectively referred to as the communication between the base station 200 and the network node 100.

In an embodiment, each terminal device 300 can be called an access terminal device, a User Equipment (UE), a subscriber unit, a subscriber station, a mobile radio station, a mobile station, a remote station, a remote terminal device, a mobile device, a user terminal device, a wireless communication device, a user agent, or a user device. For example, each terminal device may be a cellular phone, a cordless phone, a Session Initiation Protocol (SIP) phone, a Wireless Local Loop (WLL) station, a Personal Digital Assistant (PDA), a handheld device with wireless communication function, a computing device or other processing devices connected to wireless modems, a vehicle-mounted device, a wearable device, a terminal device for 5G networks or future generation of networks over 5G, etc. This embodiment is not limited thereto.

In an embodiment, the base station 200, i.e., the communication base station, belongs to a form of radio station, and refers to a radio transceiver station that transmits/receives information to/from mobile phone terminals in a certain radio coverage area. The main function of the base station is to provide wireless coverage, that is, to realize wireless signal transmission between wired communication networks and wireless terminals. Specifically, in this embodiment, the base station 200 is configured to realize wireless communication with terminal devices.

In an embodiment, the network node 100 may have different configurations. It can be understood that the network node 100 may be a smart panel adapted to various protocols of the 4th generation wireless communication or the 5th generation wireless communication. The smart panel may integrate with some other components, including communication functions with base stations and terminal devices, while also integrating other performances such as algorithms and control. For example, in practical application prospects, the panel can be a reconfigurable intelligent surface (RIS) smart panel. Alternatively, the network node 100 can also be a communication media under any circumstances, which can integrate the storage function, or can be connected with a storage device internally or externally, and can store the corresponding communication content for later use when communicating with the base station 200 and the terminal device 300, and also the information related to the network node 100. For example, communication information from the base station 200, preset beams, operating mode information of the network node 100, detection information for beams in the network node 100, etc can be stored. This embodiment is not limited thereto.

In an embodiment, the network node 100, the base station 200 and the terminal device 300 can be in any positional relationship. In this case, the relative positional relationship between the network node 100 and the base station 200 and between the network node 100 and the terminal device 300 is not fixed. When there are multiple terminal devices 300, the positional relationship between each terminal device 300 is not limited, so the relative positional relationship between the network node 100 and each terminal device 300 is also not fixed.

In an embodiment, both the position information of the network node 100 and the position information of the base station 200 can be predetermined. That is, in this case, the relative position relationship between the network node 100 and the base station 200 is fixed, and the beam of the network node 100 corresponding to the base station 200 can also be determined accordingly.

Both the base station 200 and the network node 100 may respectively include a memory and a processor. The memory and the processor may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

The network topology and application scenarios described in an embodiment of the present disclosure are intended for better understanding rather than limitations to the technical scheme of various embodiments of the present disclosure. It is known to those having ordinary skills in the art that, with the evolution of the network topology and the emergence of new application scenarios, the technical scheme provided by the embodiment of the present disclosure is also applicable to similar technical problems.

It can be understood by those having ordinary skills in the art that the network topology shown in FIG. 1 does not constitute a limitation to the embodiment of the present disclosure, and may include more or fewer components than those shown, or some components may be combined, or have different component arrangements.

In the network topology shown in FIG. 1, the base station 200 or the network node 100 can respectively call the stored beam processing program thereon to execute the method for beam processing.

Several embodiments of the method for beam processing are provided based on the above network topology in the present disclosure.

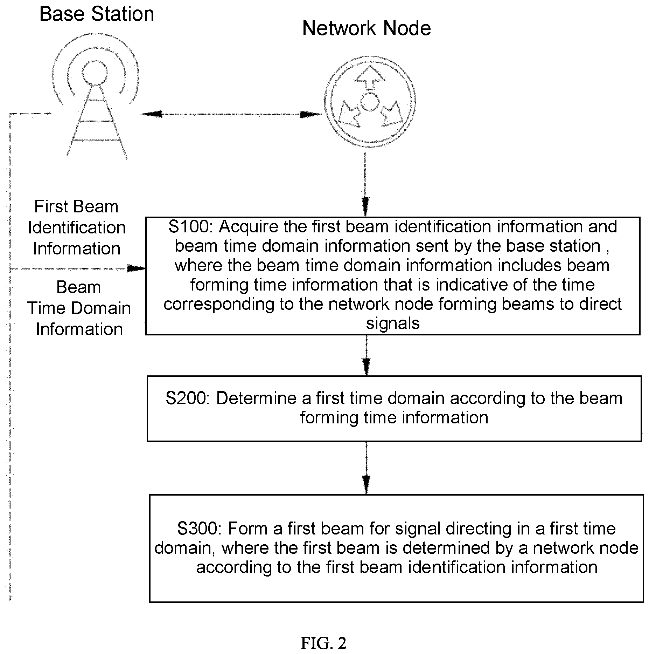

FIG. 2 depicts a flowchart showing a method for beam processing according to an embodiment of the present disclosure. The method can be applied to the network node in the embodiment shown in FIG. 1. The method includes but is not limited to operations S100 to S300 below.

At S100, the first beam identification information and beam time domain information sent by the base station is acquired, where the beam time domain information includes beamforming time information that is indicative of the time corresponding to the network node forming beams to direct signals.

In an embodiment, the first beam identification information and the beam time domain information can be acquired concurrently, but this embodiment is not limited thereto. There are many ways to send the first beam identification information and the beam time domain information. For example, the information can be sent by the base station, or the information can be sent by the base station through the control unit or control center on the relevant network, but this embodiment is not limited thereto.

It can be understood that, the base station has some relations with the base station side. The differences are that: the base station belongs to a single device, and the beam is directed at the base station to direct signal communicated between the base station and the terminal device. The base station side includes the base station, and may also include other devices or control units. When referring to the base station side communicating with the network node, it may be referring to the communication between the base station and the network node, or the communication between other devices or control units in the base station side and the network node. The present disclosure is not limited thereto.

In an embodiment, the first beam identification information is indicative of a beam directed at a terminal device. When the network node obtains the first beam identification information, the network node and the terminal device can cooperate through the identified beam by the first beam identification information. Beamforming time information can be indicative of the time required for signal transmission between the base station and the corresponding terminal device through the beam. That is, the signal transmission between the base station and the terminal device in a specific application scenario is reflected, so that the network node can cooperatively direct the signal transmission between the base station and the terminal device based on the application scenario.

It should be noted that since a base station can correspond to different terminal devices respectively, there may be a plurality of pieces of first beam identification information and a plurality of pieces of beamforming time information. Each pair of first beam identification information and beam time domain information corresponds to one terminal device. Accordingly, the network node obtains a pair of first beam identification information and beam time domain information. In this case, the network nodes can correspond to the base station and the terminal device corresponding to the pair of first beam identification information and beam time domain information, respectively. It can be understood that any terminal device and base station can cooperate with each other in a similar manner. Therefore, in order to avoid redundancy, the following descriptions of related embodiments are generally described with a network node, a base station, and one terminal device, but the present disclosure is not limited thereto.

At S200, a first time domain is determined according to the beamforming time information.

At S300, a first beam for signal directing is formed in a first time domain, where the first beam is determined by a network node according to the first beam identification information.

In an embodiment, the network node can determine the first beam for signal directing based on the first beam identification information, so that the electromagnetic wave signals sent or received by the base station can be directed through the first beam under the condition that the first beam is formed in the first time domain. That is, the electromagnetic wave signal directing can improve the target electromagnetic wave signal receiving capacity of the base station or the terminal device, thereby enhancing the wireless communication quality and improving wireless communication efficiency. Moreover, since the first time domain is determined according to the beamforming time information, and the beamforming time information can represent the corresponding time during which the network node forms the beam for signal directing. And thus, the network node can conduct signal directing by forming the corresponding beam in the first time domain in the corresponding time, thus avoiding the generation of disordered directing or signaling storm, which is beneficial to improving the wireless communication efficiency.

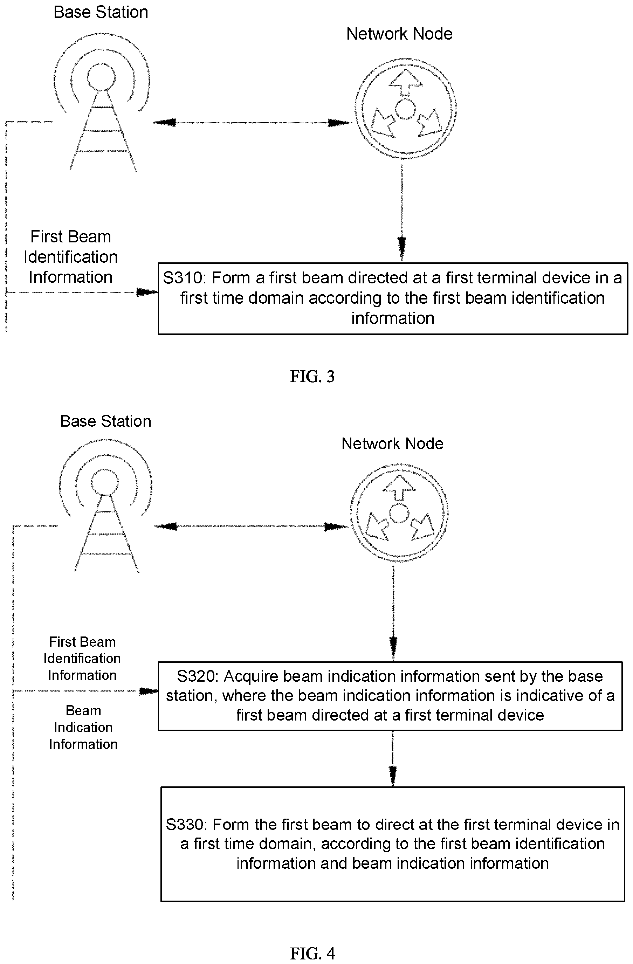

As shown in FIG. 3, S300 includes but is not limited to, operation S310 in case that the first beam identification information further includes beam indication information that is indicative of a first beam directed at a first terminal device.

At S310, a first beam directed at a first terminal device is formed in a first time domain according to the first beam identification information.

In an embodiment, since the first beam identification information includes beam indication information that is indicative of the first beam directed at the first terminal device, the network node can simultaneously determine the first beam and the first terminal device that the first beam is directed at when obtaining the first beam identification information. Thus, in this case, the electromagnetic wave signal between the first terminal device and the base station can be directed by the first beam, thereby improving the wireless communication efficiency between the first terminal device and the base station.

In an embodiment, the beam indication information can be either directly indicative of the first beam directed at the first terminal device explicitly or implicitly. For example, the arrangement position of the first beam identification information is implicitly indicative of the first beam directed at the first terminal device.

As shown in FIG. 4, S300 includes but is not limited to S320 to S330.

At S320, beam indication information sent by the base station is acquired, where the beam indication information is indicative of a first beam directed at a first terminal device.

At S330, the first beam is formed to direct at the first terminal device in a first time domain, according to the first beam identification information and beam indication information.

In an embodiment, due to the beam indication information that is indicative of the first beam directed at the first terminal device, the network node can determine the first beam and the first terminal device that the first beam is directed at when obtaining the first beam identification information and the beam indication information concurrently. Thus, in this case, the electromagnetic wave signal between the first terminal device and the base station can be directed by the first beam, thereby improving the wireless communication efficiency between the first terminal device and the base station.

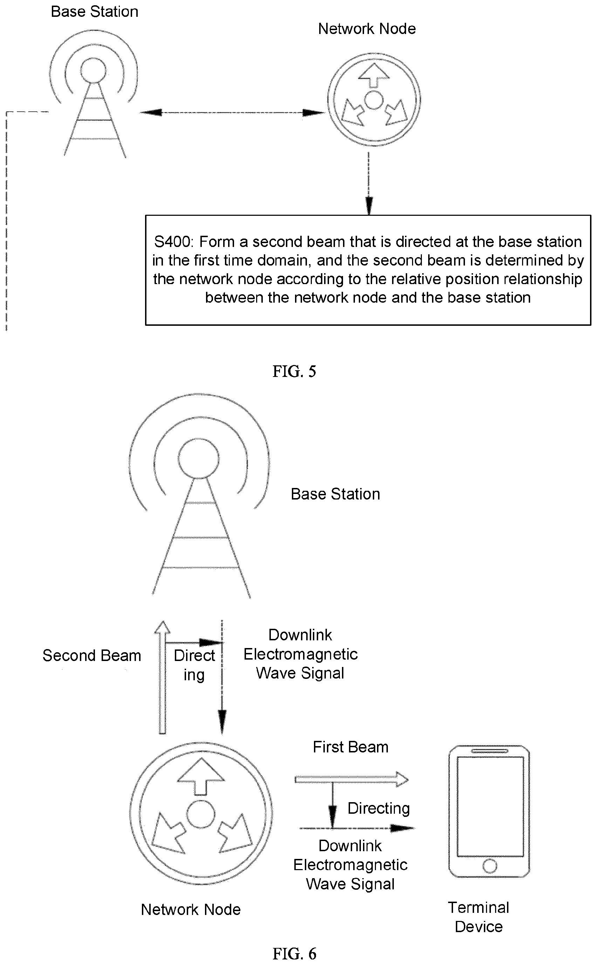

As shown in FIG. 5, the method for beam processing further includes but is not limited to, operation S400 below.

At 5400, a second beam that is directed at the base station is formed in the first time domain, and the second beam is determined by the network node according to the relative position relationship between the network node and the base station.

In an embodiment, by the formed second beam directed at the base station, the signals sent by the base station to the corresponding terminal device, or the signals sent by the corresponding terminal device to the base station can be directed through the network nodes. Thereby the wireless communication quality between the base station and the corresponding terminal device is enhanced and the wireless communication efficiency is improved.

It can be understood that, the signal directing by the network node through the first beam and the second beam can have the following two application scenarios.

In the first application scenario, as shown in FIG. 6, on one hand, the base station transmits the corresponding downlink electromagnetic wave signal to the terminal device. Due to the second beam directed at the base station, the signal sent by the base station can be directed to the network node based on the second beam. That is, the network node accesses the directed signal. On the other hand, due to the first beam being directed to the terminal device, the signal received by the network node that is sent by the base station can be further directed to the terminal device based on the first beam, so that the amount of received signal by the terminal device can be increased.

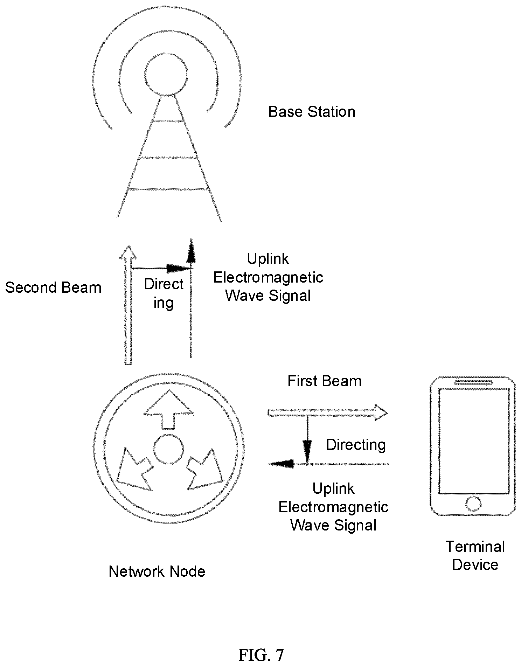

In the second application scenario, as shown in FIG. 7, on one hand, the terminal device transmits the corresponding uplink electromagnetic wave signal to the base station. Due to the first beam directed at the terminal device, the signal sent by the terminal device can be directed to the network node based on the first beam. That is, the network node accesses the directed signal. On the other hand, due to the second beam directed to the base station, the signal received by the network node that is sent by the terminal device can be further directed to the base station based on the second beam, so that the amount of received signal by the base station can be increased.

In an embodiment, since the first time domain is correspondingly determined according to the beamforming time information, and the beamforming time information can represent the time corresponding to the signal transmission between the base station and the terminal device, the network node conducts directing by forming the corresponding beam in the first time domain, so that the network node conducts directing in case of the signal transmission between the base station and the terminal device, thus avoiding the generation of disordered directing or signaling storm, which is beneficial to improving the wireless communication efficiency.

It can be understood that, if the first beam and the second beam are not formed when the base station or the terminal device transmits electromagnetic wave signals, the network node cannot normally direct the transmitted electromagnetic wave signals. Alternatively, if the transmission of the electromagnetic wave signals by the base station or the terminal device has been completed, it indicates that there is no relevant signal to be directed between the base station and the terminal device at this time. And in such a case, if the first beam and the second beam have not been terminated in time, that is, if the first beam is still directed at the terminal device, and the second beam is directed at the base station, a disorder in directing of irrelevant signals would occur. Alternatively, under the time-division condition, the network node has different beams directed at different terminal devices, and each time when a single signal directing to a terminal device is completed, the beam is correspondingly switched, and a notification is made every time the beam is switched, so frequent switchings will cause a signaling storm. In order to avoid the above problems, the time for formation of the first beam and the second beam is limited to the first time domain only, such that the network node can conduct corresponding directing only when signals are transmitted between the base station and the terminal device. As such, not only the delay in signal directing, but also the disorder directing or signaling storm can be avoided, thus improving the wireless communication efficiency between the base station and the terminal device.

In an embodiment, the beamforming time information includes beamforming symbols, and the beamforming symbols include at least one of the following types:
N1 consecutive orthogonal frequency division multiplexing (OFDM) symbols, where N1 is any integer between 1 and 14;
One OFDM symbol and N2 consecutive OFDM symbols, where N2 is 2, 4 or 7;
Two consecutive OFDM symbols and two other consecutive OFDM symbols;
One OFDM symbol, and another OFDM symbol which is 4 OFDM symbols away from the one OFDM symbol;
Two first beam symbols respectively distributed on two consecutive slots with the positions of the two first beam symbols on the respective slots corresponding with each other, and the first beam symbols include one OFDM symbol, and another OFDM symbol which is 4 OFDM symbols away from the one OFDM symbol.

It can be understood that, the beamforming symbols are equivalent to information that denotes the beamforming time in the form of symbols. Expressing the beamforming time in symbolic form can reduce the beam switching delay to the level of symbols, that is, the communication delay caused by electromagnetic signals directing through the network node can be reduced. The beamforming symbols in this embodiment are provided based on OFDM technology. In OFDM technology, the smallest unit in the frequency domain can be defined as a subcarrier and the smallest unit in the time domain as an OFDM symbol. In order to facilitate the use of frequency domain resources, a Resource Block is also defined. A resource block is defined as a specific number of consecutive subcarriers. Bandwidth Part (BWP) is also defined. A bandwidth block is defined as another specific number of consecutive resource blocks over a carrier. Also, in order to facilitate the use of time domain resources, a slot is defined. A slot is defined as another specific number of consecutive OFDM symbols.

For each beamforming symbol discussed above, each beamforming symbol can be employed in a specific scenario to provide services for the adapted channel, and some example embodiments are provided below for illustration.

### EXAMPLE EMBODIMENT ONE

For N1 consecutive OFDM symbols, the beamforming time can serve the physical uplink shared channel (PUSCH) from the terminal device to the base station. The transmission time of the PUSCH is N1 consecutive OFDM symbols. That is, the network node forms a corresponding beam within the beamforming time, to direct the electromagnetic wave signal carrying the PUSCH from the terminal device to the base station via the network node. Similarly, the beamforming time can also serve a Physical Downlink Shared Channel (PDSCH) with a duration of N1 consecutive OFDM symbols, a Physical Downlink Control Channel (PDCCH) and Physical Uplink Control Channel (PUCCH) with a duration of N1 consecutive OFDM symbols, the transmission of channel state information reference signal (CSI-RS) with a duration of one OFDM symbol, the transmission of CSI-RS with a duration of 2 OFDM symbols, the transmission of CSI-RS with the type of code division multiplexing of cdm8-FD2-TD4 with the duration of 4 OFDM symbols, and the Sounding Reference Signal (SRS) with the duration of 1 to 4 OFDM symbols.

For one OFDM symbol and N2 consecutive OFDM symbols, the beamforming time can serve the transmission channel of mini-slot. For example, one OFDM symbol serves the PDCCH of mini-slot, N2 consecutive OFDM symbols serve the PDSCH of mini-slot, or serve the PUSCH of mini-slot.

For two consecutive OFDM symbols and two other consecutive OFDM symbols, the beamforming time can serve CSI-RS with a duration of four OFDM symbols. For example, two consecutive OFDM symbols serve one group of OFDM symbols carrying CSI-RS, and the other two consecutive OFDM symbols serve another group of OFDM symbols carrying CSI-RS, where the four OFDM symbols carrying CSI-RS are formed of two groups of OFDM symbols, each group including two consecutive OFDM symbols.

For one OFDM symbol and another OFDM symbol which is 4 OFDM symbols away from the one OFDM symbol, the beamforming time can serve Channel State Information Reference Signal for tracking (TRS). For example, one OFDM symbol serves the first OFDM symbol carrying TRS, and the other OFDM symbol serves the last OFDM symbol carrying TRS, where all OFDM symbols carrying TRS include two OFDM symbols, and the last OFDM symbol is separated from the first OFDM symbol by four OFDM symbols.

For two first beam symbols distributed on two consecutive slots, the beamforming time can serve TRS. For example, two OFDM symbols on the first slot serve two OFDM symbols on one slot carrying TRS, and two OFDM symbols on the last slot serve two OFDM symbols on another slot carrying TRS, where all the OFDM symbols carrying TRS are distributed on two consecutive slots. TRS on each slot are carried at the same OFDM symbol position. And the OFDM symbols carrying TRS on each slot are one OFDM symbol and another OFDM symbol which is four OFDM symbols away from the one OFDM symbol.

It should be noted that the relevant beams in the network node, including the first beam and the second beam, can all be called spatial filters, or a combination of operating parameters of each operating unit in the network node. That is, each beam of the network node can be one-to-one corresponding with a respective spatial filter used by the network node, and one spatial filter corresponds to one beam. Alternatively, each beam can be one-to-one corresponding with a respective combination of operating parameters of each operating unit in the network node, and one beam can correspond with one combination of operating parameters.

With respect to the second beam, in the case that the relative position between the network node and the base station is fixed, the second beam can be specifically determined without limitations thereto, from a plurality of preset beams by the network node.

In an embodiment, since the relative position between the network node and the base station is fixed, the corresponding position of the base station can be directly determined based on this information when the position of the network node is determined, so that the fixed beam directed at the base station can be directly determined. In such a case, the corresponding beam can be directly determined from the preset beams without beam forming according to the first time domain, so that the network node can direct at the base station based on the fixed beam to achieve signal directing. As such, the operations required by the network node is simplified and network resources are thus saved.

For the second beam, in the case that the relative position between the network node and the base station is not fixed, the second beam may be determined by the network node without limitation thereto, according to the second beam identification information sent by the base station.

In an embodiment, since the relative position between the network node and the base station is not fixed, the network node cannot determine the position of the base station, so it is not possible to direct at the base station based on the fixed beam. Under this condition, similar to obtaining the first beam identification information, the second beam is determined by the second beam identification information sent by the base station, so that the network node can direct at the base station based on the second beam and realize signal directing.

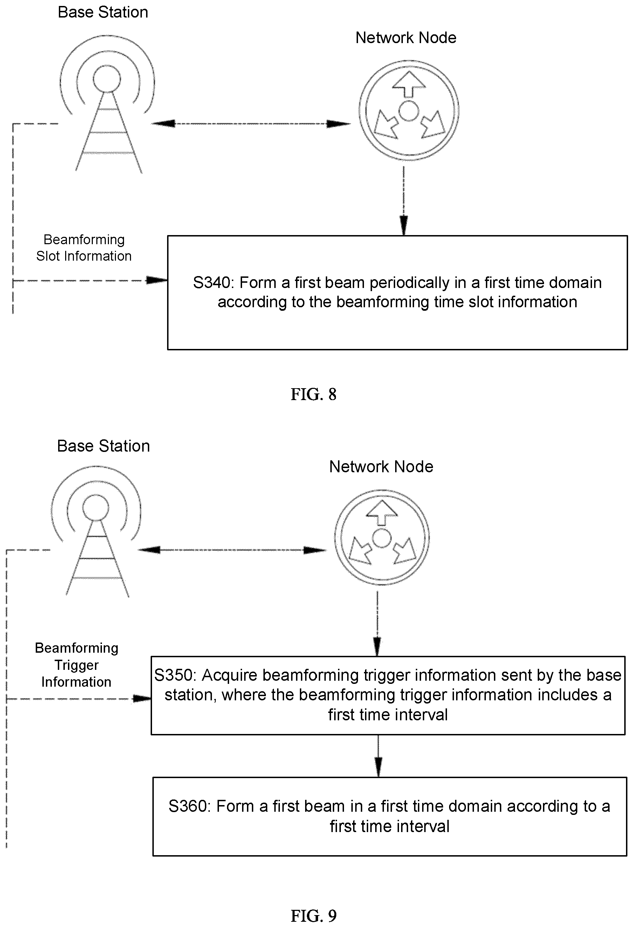

As shown in FIG. 8, S300 includes but is not limited to, operation S340, in the case that the beam time domain information further includes beamforming slot information that is indicative of the period for beamforming.

At S340, a first beam is formed periodically in a first time domain according to the beamforming slot information.

In an embodiment, the beamforming slot information is indicative of the period for beamforming. That is, the time for beamforming is periodic and described in slots. Beams can be formed over offset slots in each period. For example, beams are formed over all OFDM symbols in the offset slot of each period. Alternatively, beams are formed over particular OFDM symbols in the offset slot of each period. Alternatively, beams are formed over negotiated OFDM symbols in the offset slot of each period. Alternatively, beams are formed over OFDM symbols pre-designated by the base station in the offset slot of each period. Alternatively, beams are formed over OFDM symbols pre-determined by the network node over the offset slot of each period.

In an embodiment, the network node can periodically form the first beam in the first time domain by the acquired beamforming slot information. It can be understood that the second beam can also be periodically formed in the first time domain when the network node acquires the second beam identification information. For example, in practical application, when the base station sends the beamforming slot information to the network node, the base station does not need to repeatedly send the first beam identification information to the network node. Even if the base station only informs the network node of the first beam identification information once, the network node can still form the corresponding first beam periodically according to the beamforming slot information. And since the first beam is only formed in the offset slot of each period, the remaining time in each period can be allocated to other services, for example, to form another beam directed at another terminal device, which is beneficial to improving the operating efficiency of the network node.

As shown in FIG. 9, S300 includes but is not limited to S350 to S360 below.

At S350, beamforming trigger information sent by the base station is acquired, where the beamforming trigger information includes a first time interval.

At S360, a first beam and a second beam are formed respectively in a first time domain according to a first time interval.

In an embodiment, the beamforming trigger information is indicative of the triggering operation carried out by the base station. That is, the base station informs the network node of the formation of the corresponding beam and the time at which the corresponding beam is formed in a triggering manner. The time at which the beam is formed can be determined according to the time at which the beamforming is triggered. The time at which the beam is formed can be determined according to the time at which the beamforming is triggered and the set first time interval. The trigger can also be notified without limitations by, notification of a triggering event, transmission of a triggering signaling, transmission of a triggering signal, or generation of a triggering event in addition to the transmission of the beamforming trigger information. Supposed that, the time at which the beamforming is triggered is denoted as Ta, the time at which the beam is formed is denoted as Tb, and the first time interval is denoted as Tf, then the value of Tb can be determined by the value of Ta by the following equation, Tb=Ta+Tf. The first time interval can be configured by the base station itself. Alternatively, the first time interval can be determined by the network node according to the practical application scenario and reported to the base station. Alternatively, the first time interval can be predetermined by a protocol. For example, the first time interval can be configured by the base station. The network node may be informed by the configured beamforming trigger information that may include the first time interval. The time at which the beamforming is triggered, is the time at which the beamforming trigger information is sent.

In an embodiment, under the effect of beamforming trigger information, when the time at which the beamforming is triggered is determined, the time at which the beam is formed can be determined accordingly. Therefore, in a practical application scenario, a network node can accurately form a first beam and a second beam at a specified time in a first time domain by the designated received beamforming trigger information sent by a base station. The designated time is the time required by the current scenario, which can meet the time domain requirements of forming corresponding beams in the current scenario.

It can be understood that, in one case, the time when the base station sends the beamforming trigger information is the time when the network node receives the beamforming trigger information, so the base station can indirectly indicate the time when the beamforming trigger information is sent, by sending the beamforming trigger information.

It should be noted that in case that, the time at which the beam is formed is determined according to the time at which the beamforming is triggered, it is unnecessary to consider the first time interval. In such a case, the time at which the beam is formed can be set according to the practical situation. For example, the base station triggers the formation of the corresponding beam of the network node at the time Ta, and the network node will form the corresponding beam at the time Tb, where the time Tb is determined according to the time Ta.

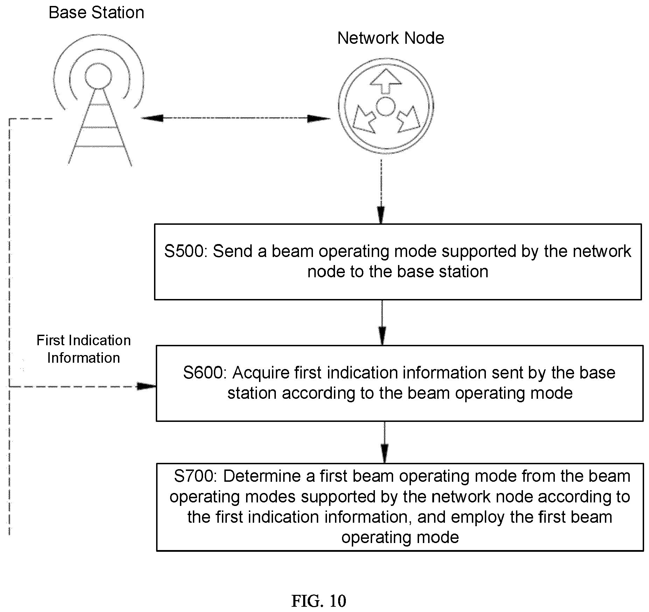

In the embodiment shown in FIG. 10, the method for beam processing further includes but is not limited to, operations S500 to S700 below.

At S500, a beam operating mode supported by the network node is sent to the base station.

At S600, first indication information sent by the base station is acquired according to the beam operating mode.

At S700, a first beam operating mode is determined from the beam operating modes supported by the network node according to the first indication information, and the first beam operating mode is then employed.

In an embodiment, the network node can know the specific operating mode indication to the network node by the base station by obtaining the first indication information sent by the base station. In practical application scenarios, the operating mode of the network node can be controlled by controlling the first indication information sent by the base station, which provides an approach to control the operating mode of the network node. As such the operating mode of the network node can be effectively adjusted without controlling the network node itself, and the control flow of the network node can be optimized.

In an embodiment, the beam operating modes supported by the network node include a preset default beam operating mode. When the first indication information indicates the default beam operating mode or the indication is null, the network node determines and employs the default beam operating mode. Alternatively, only the default beam operating mode needs to be sent to the base station when it is determined that the network node employs the default beam operating mode only. By applying the default beam operating mode, the network node enables a more reasonable cooperation of each operating unit within the network node, and can also reduce the amount of configuration to the network node carried out by the base station, thus saving network configuration resources.

In an embodiment, the initial operating mode of a network node can be set as a preset default beam operating mode, so that the initial operating mode is in a state with determined parameters, which facilitates the controlling of the operating state of the network node.

In an embodiment, the beam operating mode supported by the network node includes several operating parameters, which may include but are not limited to at least one of the following types:
duration of operating mode;
time for switching operating mode;
area of the operating surface configured for directing electromagnetic wave signals;
material parameters or materials configured for directing electromagnetic wave signals;
shape of the operating surface configured for directing electromagnetic wave signals;
orientation of the operating surface configured for directing electromagnetic wave signals;
included angle between the normal of the operating surface configured for directing the electromagnetic wave signal and the beam directing the electromagnetic wave signals;
number of units arranged on the operating surface configured for directing electromagnetic wave signals.

In particular, the duration of the operating mode can be the length or the range in time of the operating mode. For example, the duration can be presented as the start time and end time of the operating mode, and can be the time length of beamforming, or the time range of beamforming, for example, the start time and end time of beamforming.

The time for switching operating mode is, for example, the start time and the end time of the operating mode, or the start time and the end time of the beamforming.

The area of the operating surface configured for directing electromagnetic wave signals can be, for example, the area of the operating surface for receiving electromagnetic wave signals from the base station, the area of the operating surface for receiving electromagnetic wave signals from the terminal device, or the ratio of the area of the operating surface for receiving electromagnetic wave signals from the base station to the area of the operating surface for receiving electromagnetic wave signals from the terminal device, or the ratio of the area of the operating surface for receiving electromagnetic wave signals from the terminal device to the area of the operating surface for receiving electromagnetic wave signals from the base station.

Material parameters for directing electromagnetic wave signals, can be for example, electromagnetic wave absorption coefficient, electromagnetic wave loss coefficient, electrical conductivity and electromagnetic wave directing coefficient. And the materials configured for directing electromagnetic wave signals can be superconducting materials, low superconducting materials, high superconducting materials, or medium superconducting materials.

The shape of the operating surface configured for directing electromagnetic wave signals can be rectangular, circular, parabolic, concave, flat or transparent, for example.

The orientation of the operating surface configured for directing electromagnetic wave signals, can be facing for example, upward, downward, or towards the base station.

For example, the included angle between the normal of the operating surface configured for directing the electromagnetic wave signals and the beam configured for directing the electromagnetic wave signals can be set as an acute angle, a right angle, or an obtuse angle.

The number of units arranged on the operating surface configured for directing electromagnetic wave signals can be set for example, to 1, 2, or 4.

It can be understood that, due to the correspondence between the beam operating modes and the operating parameters, the relevant beam operating modes can be further determined by the corresponding operating parameters. And thus, the first indication information sent by the base station can be explicit, that is, the corresponding beam operating modes can be directly indicated by the first indication information. Alternatively, the first indication information can be implicit, that is, the operating parameters can be directly indicated by the first indication information, such that the corresponding beam operating mode is indicated implicitly.

In an embodiment, S 100 is preceded by S800 without limitations.

At S800, first service information is sent to the base station, to instruct the base station to generate first beam identification information according to the first service information and the acquired target beam directing position of the network node with respect to a terminal device, where the first service information is indicative of a correspondence between each beam in the network node and a respective beam directing position.

In an embodiment, through the first service information sent to the base station, the base station can generate the first beam identification information based on the first service information, that is, the base station is enabled to simply and accurately determine the first beam identification information based on the first service information, which is beneficial to simplifying the operation process of the base station.

In an embodiment, the first beam identification information includes first implicit information that is indicative of the target beam directing position of the network node with respect to a terminal device. It can be understood that the network node can form a first beam configured to be directed at the terminal device corresponding to the target beam directing position in the first time domain according to the first implicit information and the first service information by means of the first service information stored in the network node when the network node acquires the first implicit information. Therefore, in practical applications, the base station can directly send the target beam directing position to the network node without sending the related information of the determined first beam, that is, the network node can indirectly determine the first beam based on the target beam directing position.

In an embodiment, S 100 is preceded by S900 without limitations.

At S900, second service information is sent to the base station, to instruct the base station to generate the first beam identification information according to the second service information and an acquired first beam test parameter, where the second service information is indicative of a correspondence between each template beam in the network node and the respective test values of each template beam.

In an embodiment, through the second service information sent to the base station, the base station can generate the first beam identification information based on the second service information, that is, the base station is enabled to simply and accurately determine the first beam identification information based on the second service information, which is beneficial to simplifying the operation process of the base station.

In an embodiment, the first beam identification information includes the second implicit information that carries the first beam test parameters for the template beam. It can be understood that the network node can form the first beam corresponding to the first beam test parameters in the first time domain according to the first beam test parameters and the second service information by means of the second service information stored in the network node when the network node acquires the second implicit information. That is, a template beam corresponding to the first beam test parameters is formed. Therefore, in practical applications, the base station can directly send the corresponding beam test parameters for the template beam to the network node without sending the relevant information of the determined first beam. That is, the network node can indirectly determine the first beam based on the corresponding beam test parameters for the template beam.

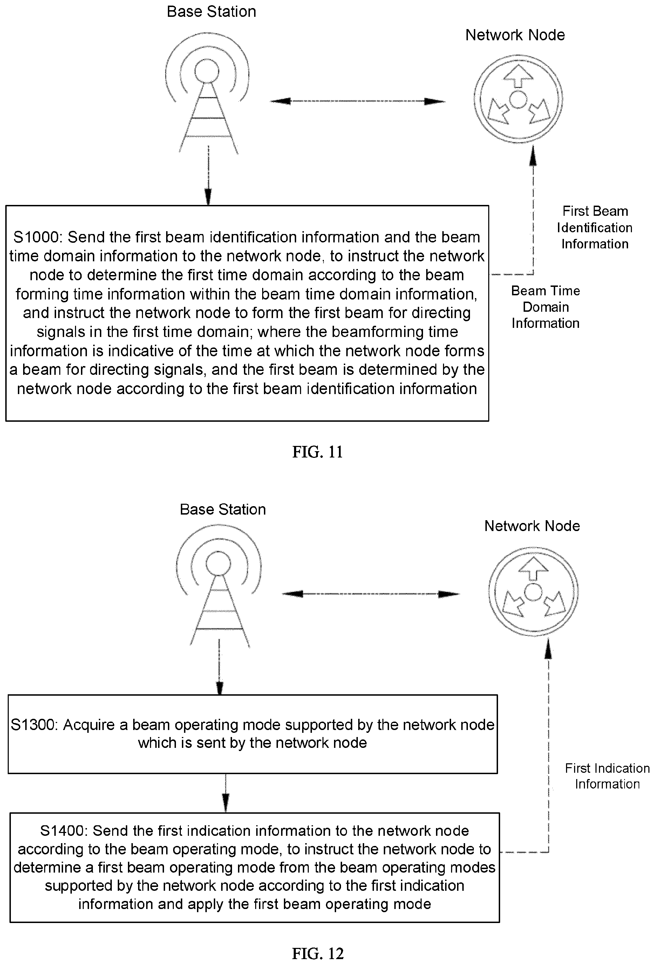

FIG. 11 depicts a flowchart showing a method for beam processing according to another embodiment of the present disclosure. The method can be applied to the base station in the embodiment shown in FIG. 1. The method includes but is not limited to operation 51000 below.

At S 1000, the first beam identification information and the beam time domain information are sent to the network node, to instruct the network node to determine the first time domain according to the beamforming time information within the beam time domain information, and instruct the network node to form the first beam configured for signal directing in the first time domain.

In particular, the beamforming time information is indicative of the time at which the network node forms a beam configured for signal directing, and the first beam is determined by the network node according to the first beam identification information.

In an embodiment, the first beam identification information sent by the base station enables the network node to determine the first beam for directing signals based on the first beam identification information, so that the electromagnetic wave signals sent or received by the base station can be directed through the first beam under the condition that the first beam is formed in the first time domain. That is, the electromagnetic wave signal directing can improve the electromagnetic wave signal receiving capacity of the base station, thereby enhancing the wireless communication quality and improving wireless communication efficiency. Moreover, since the first time domain is determined according to the beamforming time information, and the beamforming time information can represent the time at which the network node forms the beam for signal directing. And thus, the network node can conduct signal directing in the corresponding time by forming the corresponding beam in the first time domain, thus avoiding the generation of disordered directing or signaling storm, which is beneficial to improving the wireless communication efficiency.

It should be noted that S1000 in this embodiment, and S100 to S300 in the embodiment shown in FIG. 2 have the same technical principle and the same technical effect, and the difference between the two embodiments lies in the implementing entity, in which the implementing entity in the embodiment shown in FIG. 2 is a network node, while the implementing entity of this embodiment is a base station. The technical principle and technical effect of this embodiment can be referred to the relevant descriptions in the embodiment shown in FIG. 2, and in order to avoid duplication and redundancy of contents, they are not repeated here.

It can be understood that, when the base station is matched with the terminal device, the base station can obtain the relevant information of the terminal device, such as the position information and communication capability information. Therefore, the base station can estimate the channel transmission capability between the base station and the terminal device, so as to determine the corresponding beam time domain information. Similarly, the base station can also obtain the relevant information of the network node, so as to obtain the first beam identification information based on the relevant information. Since the relevant information corresponding to the network node may be diversified, the base station can obtain the first beam identification information in diversified ways without limitations.

In an embodiment, the beam time domain information sent by the base station further includes beamforming slot information that is indicative of the period of beamforming. The network node is instructed to periodically form the first beam and the second beam in the first time domain respectively according to the beamforming slot information, by the beamforming slot information sent to the network node. That is, the network node forms the corresponding beam on the offset slot in each period. In this case, the network node can allocate the remaining time in each period to the remaining services, for example, to form another beam that is directed at another terminal device, which is beneficial to improving the operating efficiency of the network node.

It should be noted that the operations in this embodiment, and S340 in the embodiment shown in FIG. 8 have the same technical principle and the same technical effect, and the difference between the two embodiments lies in the implementing entity, in which the implementing entity in the embodiment shown in FIG. 8 is a network node, while the implementing entity of this embodiment is a base station. The technical principle and technical effect of this embodiment can be referred to the relevant descriptions in the embodiment shown in FIG. 8, and in order to avoid duplication and redundancy of contents, they are not repeated here.

In an embodiment, the base station can send beamforming trigger information to the network node. The beamforming trigger information includes a first time interval, so that the network node can form a first beam and a second beam in a first time domain respectively according to the first time interval, thus meeting the time domain requirements of forming corresponding beams in the current scene.

It should be noted that the operations in this embodiment, and S350 to S360 in the embodiment shown in FIG. 9 have the same technical principle and the same technical effect, and the difference between the two embodiments lies in the implementing entity, in which the implementing entity in the embodiment shown in FIG. 9 is a network node, while the implementing entity of this embodiment is a base station. The technical principle and technical effect of this embodiment can be referred to the relevant descriptions in the embodiment shown in FIG. 9, and in order to avoid duplication and redundancy of contents, they are not repeated here.

In an embodiment, the beamforming time information includes beamforming symbols, and the beamforming symbols include at least one of the following types:
N1 consecutive orthogonal frequency division multiplexing (OFDM) symbols, where N1 is any integer between 1 and 14;
One OFDM symbol and N2 consecutive OFDM symbols, where N2 is 2, 4 or 7;
Two consecutive OFDM symbols and two other consecutive OFDM symbols;
One OFDM symbol, and another OFDM symbol which is 4 OFDM symbols away from the one OFDM symbol;
Two first beam symbols respectively distributed on two consecutive slots with the positions of the two first beam symbols on the respective slots corresponding with each other, and the first beam symbols include one OFDM symbol, and another OFDM symbol which is four OFDM symbols away from the one OFDM symbol.

It should be noted that the beamforming symbol in this embodiment has the same technical principle and the same technical effect as the beamforming symbol in the above-described related embodiment, and the difference between the two embodiments lies in the implementing entity, in which the implementing entity in the above-described related embodiment is a network node, while the implementing entity of this embodiment is a base station. The technical principle and technical effect of this embodiment can be referred to the relevant descriptions in the above-described related embodiments, and in order to avoid duplication and redundancy of contents, they are not repeated here.

In an embodiment, the method for beam processing further includes but is not limited to operation S1100.

At S 1100, beam indication information is sent to the network node, to instruct the network node to form a first beam directed at the first terminal device in the first time domain according to the first beam identification information and the beam indication information, and the beam indication information is indicative of the first beam directed at the first terminal device.

It can be understood that S1100 in this embodiment, and S320 to S330 in the embodiment shown in FIG. 4 have the same technical principle and the same technical effect, and the difference between the two embodiments lies in the implementing entity, in which the implementing entity in the embodiment shown in FIG. 4 is a network node, while the implementing entity of this embodiment is a base station. The technical principle and technical effect of this embodiment can be referred to the relevant descriptions in the embodiment shown in FIG. 4, and in order to avoid duplication and redundancy of contents, they are not repeated here.

In an embodiment, the method for beam processing further includes but is not limited to operation S1200.

At S1200, second beam identification information is sent to the network node, to instruct the network node to determine the second beam directed at the base station according to the second beam identification information, and to instruct the network node to form the second beam in the first time domain.

In an embodiment, since the relative position between the network node and the base station is not fixed, the network node cannot determine the position of the base station, so it is not possible to direct at the base station based on the fixed beam. Under this condition, similar to obtaining the first beam identification information, the second beam is determined by the second beam identification information sent by the base station, so that the network node can direct at the base station based on the second beam and realize signal directing.

In the embodiment shown in FIG. 12, the method for beam processing further includes but is not limited to, operations S1300 to S1400 below.

At S1300, a beam operating mode supported by the network node which is sent by the network node is acquired.

At S1400, the first indication information is sent to the network node according to the beam operating mode, to instruct the network node to determine a first beam operating mode from the beam operating modes supported by the network node according to the first indication information and apply the first beam operating mode.

It should be noted that S1300 and S1400 in this embodiment, and S500 to S700 in the embodiment shown in FIG. 10 have the same technical principle and the same technical effect, and the difference between the two embodiments lies in the implementing entity, in which the implementing entity in the embodiment shown in FIG. 10 is a network node, while the implementing entity of this embodiment is a base station. The technical principle and technical effect of this embodiment can be referred to the relevant descriptions in the embodiment shown in FIG. 10, and in order to avoid duplication and redundancy of contents, they are not repeated here.

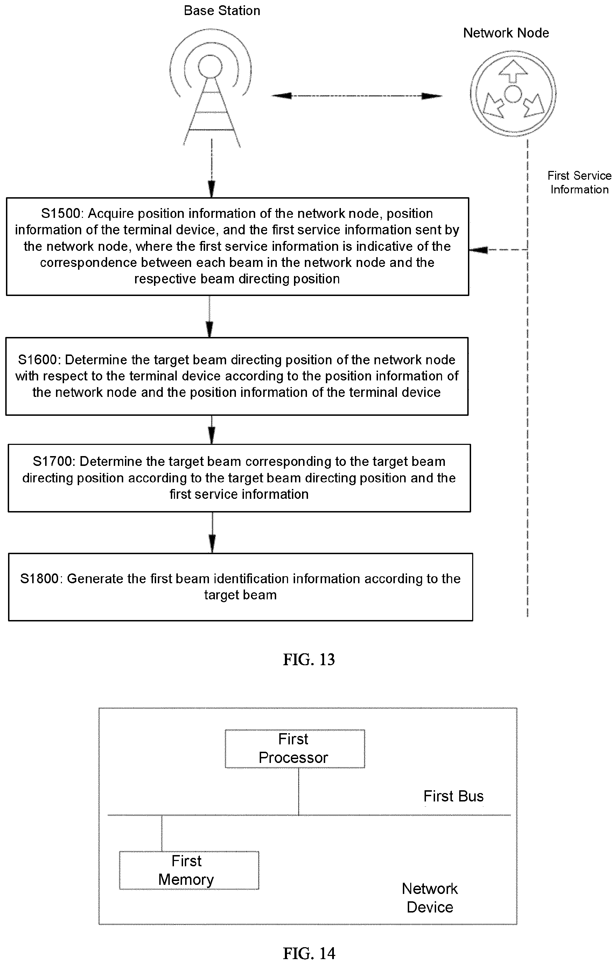

Referring to FIG. 13, before sending the first beam identification information to the network node at S1000, the method further includes but is not limited to operations S1500 to S1800 below.

At S1500, position information of the network node, position information of the terminal device, and the first service information sent by the network node are acquired, where the first service information is indicative of the correspondence between each beam in the network node and the respective beam directing position.

At S1600, the target beam directing position of the network node with respect to the terminal device is determined according to the position information of the network node and the position information of the terminal device.

At S1700, the target beam corresponding to the target beam directing position is determined according to the target beam directing position and the first service information.

At S1800, the first beam identification information is generated according to the target beam.

In an embodiment, the base station can determine the target beam through the position information of the network node, the position information of the terminal device, and the first service information sent by the network node, and then generate the first beam identification information according to the target beam. Since the first beam identification information can be determined without the position information of the base station itself, in practical applications, the base station can simply and accurately determine the first beam identification information on this basis, thus simplifying the operations carried out by the base station.

It should be noted that the first service information can be stored in the network node in advance, so that the base station can directly obtain the first service information from the network node. The way for the base station to obtain the position information of the network node and the position information of the terminal device is not limited, for example, the information can be determined through measurement by transmitting the positioning reference signal.

It can be understood that since different beam directing positions correspond to the corresponding beams respectively, the relevant beam operating mode can be further determined through the corresponding beam directing positions. Thus, the first beam identification information sent by the base station can be explicit, that is, the corresponding beam can be directly indicated by the first beam identification information. Alternatively, the first beam identification information can be implicit, that is, the beam directing position can be directly indicated by the first beam identification information, so as to indirectly indicate the corresponding beam.

In an embodiment, the network node at least includes a set of template beams. The terminal device's test values for each set of template beams have a corresponding relationship with the test positions, which is reflected in that different test positions correspond to different test values, and the corresponding relationship is stored in the network node in the form of second service information. That is, the test values of each set of fixed beams have a corresponding relationship with the beams of the network node directed at the test positions. In this case, when the base station obtains the test value of the terminal device for the template beam, the base station can determine the corresponding template beam according to the obtained second service information, and then determine the first beam identification information according to the corresponding template beam.

It should be noted that the operations in this embodiment, and S800 to S900 in the above-described embodiment have the same technical principle and the same technical effect, and the difference between the two embodiments lies in the implementing entity, in which the implementing entity in the embodiment shown in with S800, S900 is a network node, while the implementing entity of this embodiment is a base station. The technical principle and technical effect of this embodiment can be referred to the relevant descriptions in the embodiment shown regarding S800 and S900, and in order to avoid duplication and redundancy of contents, they are not repeated here.

Referring to FIG. 14, an embodiment of the present disclosure provides a network device, which includes a first memory, a first processor, and a computer program stored in the first memory and executable by the first processor.

The first processor and the first memory may be connected by a first bus or other means.

It should be noted that the network device in this embodiment can be implemented as the network node in the embodiment shown in FIG. 1. The network device in this embodiment can constitute a part of the network topology of the embodiment shown in FIG. 1, so these embodiments belong to the same invention concept and have the same implementation principles and technical effects, and which will not be described in detail here.

Non-transitory software programs and instructions of the method for beam processing described in the above embodiments are stored in a first memory which, when executed by a first processor, causes the processor to carry out operations of the method described above, for example, the above-described operations S100 to S300 described in conjunction with FIG. 2, S310 described in conjunction with FIG. 3, S320 to S330 described in conjunction with FIG.4, S400 described in conjunction with FIG. 5, S340 described in conjunction with FIG. 8, S350 to S360 described in conjunction with FIG.9, S500 to S700 described in conjunction with FIG. 10, S800, or S900.

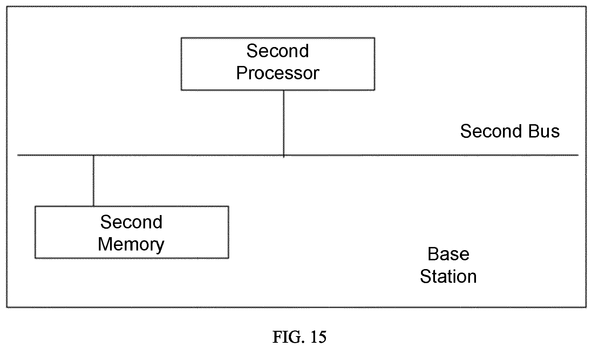

Referring to FIG. 15, an embodiment of the present disclosure provides a base station, which includes a second memory, a second processor, and a computer program stored in the second memory and executable by the second processor.

The second processor and the second memory may be connected by a second bus or other means.

It should be noted that the base station in this embodiment can be implemented as the based station in the embodiment shown in FIG. 1. The base station in this embodiment can constitute a part of the network topology of the embodiment shown in FIG. 1, so these embodiments belong to the same invention concept and have the same implementation principles and technical effects, and which will not be described in detail here.

Non-transitory software programs and instructions for the method for beam processing in the above embodiments are stored in a second memory which, when executed by a second processor, causes the processor to carry out the method for beam processing, e.g., S1000 described in conjunction with FIG. 11, S1100, S1200, S1300 to S1400 described in conjunction with FIG. 12, or S1500 to S1800 described in conjunction with FIG. 13.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

In addition, an embodiment of the present disclosure further provides a computer-readable storage medium, which stores computer-executable instructions which, when executed by a first processor, a second processor, or controller, for example, by the first or second processor in the device embodiment, causes the first or second processor to carry out the operations of the method described above, for example, the above-described operations S100 to S300 described in conjunction with FIG. 2, S310 described in conjunction with FIG. 3, S320 to S330 described in conjunction with FIG.4, S400 described in conjunction with FIG. 5, S340 described in conjunction with FIG. 8, S350 to S360 described in conjunction with FIG. 9, S500 to S700 described in conjunction with FIG. 10, S800, S900, or S1000 described in conjunction with FIG. 11, S1100, S1200, S1300 to S1400 described in conjunction with FIG. 12, or S1500 to S1800 described in conjunction with FIG. 13.

In an embodiment, there is provided a method for beam processing, which includes, acquiring first beam identification information and beam time domain information sent by the base station, where the beam time domain information includes beamforming time information that is indicative of a time corresponding to the network node forming beams to direct signals; determining a first time domain according to the beamforming time information; and forming a first beam configured for signal directing in the first time domain, where the first beam is determined by the network node according to the first beam identification information. According to the schemes provided in the present disclosure, the network node can determine the first beam for signal directing based on the first beam identification information, so that the electromagnetic wave signals sent or received by the base station can be directed through the first beam under the condition that the first beam is formed in the first time domain. That is, the electromagnetic wave signal directing can improve the target electromagnetic wave signal receiving capacity of the base station or the terminal device, thereby enhancing the wireless communication quality and improving wireless communication efficiency. Moreover, since the first time domain is determined according to the beamforming time information, and the beamforming time information can represent the time at which the network node forms the beam for signal directing. And thus, the network node can conduct signal directing in the corresponding time by forming the corresponding beam in the first time domain, thus avoiding the generation of disordered directing or signaling storm, which is beneficial to improving the wireless communication efficiency.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of some embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for beam processing, which is applied to a network node, the method comprising,
acquiring first beam identification information and beam time domain information sent by a base station, wherein the beam time domain information comprises beamforming time information that is indicative of a time corresponding to beamforming by the network node for signal directing;
determining a first time domain according to the beamforming time information; and
forming a first beam for signal directing in the first time domain, wherein the first beam is determined by the network node according to the first beam identification information.

2. The method as claimed in claim 1, wherein
the first beam identification information further comprises beam indication information which is indicative of a first beam directed at a first terminal device; and
forming the first beam for signal directing in the first time domain comprises,
forming the first beam directed at the first terminal device in the first time domain according to the first beam identification information.

3. The method as claimed in claim 1, wherein forming the first beam for signal directing in the first time domain comprises,
acquiring beam indication information sent by the base station, wherein the beam indication information is indicative of the first beam directed at a first terminal device; and
forming the first beam directed at the first terminal device in the first time domain according to the first beam identification information and the beam indication information.

4. The method as claimed in any one of claim 1 to claim 3, further comprising,
forming a second beam in the first time domain, wherein the second beam is determined by the network node according to a relative position relationship between the network node and the base station, and the second beam is configured to be directed at the base station.

5. The method as claimed in claim 4, wherein the second beam is determined by,
the network node according to second beam identification information sent by the base station;
or,
the network node from several preset beams.

6. The method as claimed in claim 1, wherein the beamforming time information comprises a plurality of beamforming symbols, and the beamforming symbols comprise at least one of,
N1 consecutive orthogonal frequency division multiplexing (OFDM) symbols, wherein N1 is an integer between 1 and 14;
one OFDM symbol and N2 consecutive OFDM symbols, wherein N2 is 2, 4 or 7;
two consecutive OFDM symbols and another two consecutive OFDM symbols;
one OFDM symbol and another OFDM symbol which is separated from the one OFDM symbol by four OFDM symbols; or
two first beam symbols each distributed over a respective one of two consecutive slots, wherein a position of one of the two first beam symbols on a respective slot of the two consecutive slots corresponds to a position of the other one of the two first beam symbols on a respective slot of the two consecutive slots, and the first beam symbols comprise one OFDM symbol and another OFDM symbol which is separated from the one OFDM symbol by four OFDM symbols.

7. The method as claimed in claim 1, wherein
the beam time domain information further comprises beamforming slot information that is indicative of a period of beamforming; and
forming the first beam for signal directing in the first time domain comprises,
forming the first beam periodically in the first time domain according to the beamforming slot information.

8. The method as claimed in claim 1, wherein forming the first beam for signal directing in the first time domain comprises,
acquiring beamforming trigger information sent by the base station, wherein the beamforming trigger information comprises a first time interval, and
forming the first beam in the first time domain according to the first time interval.

9. The method as claimed in claim 1, wherein before acquiring the first beam identification information and the beam time domain information sent by the base station, the method further comprises,
sending first service information to the base station, to instruct the base station to generate the first beam identification information according to the first service information and an acquired target beam directing position of the network node with respect to a terminal device, wherein the first service information is indicative of a correspondence between each beam in the network node and a respective beam directing position.

10. The method as claimed in claim 1, wherein
the first beam identification information comprises first implicit information that is indicative of a target beam directing position of the network node with respect to a terminal device; and
forming the first beam for signal directing in the first time domain comprises,
forming a first beam in the first time domain according to the first implicit information and the first service information, the first beam being configured to be directed at the terminal device corresponding to the target beam directing position; and wherein
the first service information is indicative of a correspondence between each beam in the network node and a respective beam directing position.

11. The method as claimed in claim 1, wherein before acquiring the first beam identification information and the beam time domain information sent by the base station, the method further comprises,
sending second service information to the base station, to instruct the base station to generate the first beam identification information according to the second service information and an acquired set of test values of a template beam of the network node with respect to a terminal device, wherein the second service information is indicative of a correspondence between each template beam in the network node and the respective set of test values of the template beam.

12. The method as claimed in claim 11, wherein the first beam identification information comprises second implicit information that is indicative of a set of test values of a template beam of the network node with respect to a terminal device; and
forming the first beam for signal directing in the first time domain comprises,
forming a first beam corresponding to a first beam test parameter in the first time domain according to the set of test values of the template beam of the network node with respect to the terminal device and the second service information.

13. The method as claimed in claim 1, further comprising,
sending a beam operating mode that is supported by the network node to the base station;
acquiring first indication information, wherein the first indication information is sent by the base station according to the beam operating mode; and
determining a first beam operating mode from at least one beam operating mode supported by the network node according to the first indication information, and employing the first beam operating mode.

14. A method for beam processing, which is applied to a base station, the method comprising,
sending first beam identification information and beam time domain information to a network node, to instruct the network node to determine a first time domain according to beamforming time information within the beam time domain information, and to instruct the network node to form a first beam for signal directing for the base station in the first time domain; and
wherein, the beamforming time information is indicative of a time corresponding to beamforming by the network node for signal directing, and the first beam is determined by the network node according to the first beam identification information.

15. The method as claimed in claim 14, further comprising,
sending beam indication information to the network node, to instruct the network node to form the first beam configured to be directed at a first terminal device in the first time domain according to the first beam identification information and the beam indication information, wherein the beam indication information is indicative of the first beam directed at the first terminal device.

16. The method as claimed in claim 14 or claim 15, further comprising,
sending second beam identification information to the network node, to instruct the network node to determine a second beam configured to be directed at the base station according to the second beam identification information, and to instruct the network node to form the second beam in the first time domain.

17. The method as claimed in claim 14, wherein the beamforming time information comprises a plurality of beamforming symbols, and the beamforming symbols comprise at least one of,
N1 consecutive orthogonal frequency division multiplexing (OFDM) symbols, wherein N1 is any integer between 1 and 14;
one OFDM symbol and N2 consecutive OFDM symbols, wherein N2 is 2, 4 or 7;
two consecutive OFDM symbols and another two consecutive OFDM symbols;
one OFDM symbol, and another OFDM symbol which is separated from the one OFDM symbol by four OFDM symbols; or
two first beam symbols each distributed over a respective one of two consecutive slots, wherein a position of one of the two first beam symbols on a respective slot of the two consecutive slots corresponds to a position of the other one of the two first beam symbols on a respective slot of the two consecutive slots, and the first beam symbols comprise one OFDM symbol and another OFDM symbol which is separated from the one OFDM symbol by four OFDM symbols.

18. The method as claimed in claim 14, further comprising,
acquiring a beam operating mode supported by the network node, wherein the beam operating mode is sent by the network node; and
sending first indication information to the network node according to the beam operating mode, to instruct the network node to determine a first beam operating mode from at least one beam operating mode supported by the network node according to the first indication information, and to employ the first beam operating mode.

19. The method as claimed in claim 14, wherein before sending the first beam identification information to the network node, the method further comprises,
acquiring position information of the network node, position information of a terminal device, and first service information sent by the network node, wherein the first service information is indicative of a correspondence between each beam in the network node and a respective beam directing position;
determining a target beam directing position of the network node with respect to the terminal device according to the position information of the network node and the position information of the terminal device;
determining a target beam corresponding to the target beam directing position according to the target beam directing position and the first service information; and
generating the first beam identification information according to the target beam.

20. The method as claimed in claim 19, wherein the first beam identification information comprises first implicit information that is indicative of a target beam directing position of the network node with respect to a terminal device.

21. The method as claimed in claim 14, wherein before sending the first beam identification information to the network node, the method further comprises,
acquiring a set of test values of a template beam of the network node with respect to a terminal device, and second service information sent by the network node, wherein the second service information is indicative of a correspondence between each template beam in the network node and a test value of the respective template beam;
determining a target beam corresponding to the set of test values of the template beam of the network node with respect to the terminal device according to the set of test values of the template beam of the network node with respect to the terminal device, and the second service information; and
generating the first beam identification information according to the target beam.

22. The method as claimed in claim 21, wherein the first beam identification information comprises second implicit information that is indicative of the set of test values of the template beam of the network node with respect to the terminal device.

23. A network device, comprising a first memory, a first processor, and a computer program stored in the first memory and executable by the first processor which, when executed by the first processor causes the first processor to carry out the method as claimed in any one of claims 1 to 13.

24. A base station, comprising a second memory, a second processor, and a computer program stored in the second memory and executable by the second processor which, when executed by the second processor causes the second processor to carry out the method as claimed in any one of claims 14 to 22.

25. A computer-readable storage medium storing a computer-executable instruction which, when executed by a processor causes the processor to carry out the method as claimed in any one of claims 1 to 13, or the method as claimed in any one of claims 14 to 22.
